# EUROPÄISCHE PATENTANMELDUNG

(11) **EP 1 415 836 A1**
(43) Veröffentlichungstag der Anmeldung: **06.05.2004**
(21) Anmeldenummer: 03024716.7
(22) Anmeldetag: 28.10.2003
(51) Int. Cl.: B60J 7/00

(54) **Öffnungsfähige Dachvorrichtung mit Verdunkelungsrollo**

(30) Priorität: 28.10.2002 FR 0213449
(71) Anmelder: Webasto Vehicle Systems International GmbH, 82131 Stockdorf (DE)
(72) Erfinder: Albert, Jean-Paul, 79700 St. Pierre des Echaubrognes (FR)
(74) Vertreter: Bedenbecker, Markus

(57) **Zusammenfassung**

Die vorliegende Erfindung betrifft eine öffnungsfähige Dachvorrichtung 1 insbesondere für Kraftfahrzeuge, wobei die öffnungsfähige Dachvorrichtung 1 eine Scheibe 1, welche in der Bewegung in bezug auf eine Öffnung in der Dachhaut des Fahrzeuges in im wesentlichen komplementärer Form beweglich montiert ist sowie ein Verdunkelungsrollo 20 mit Aufrollvorrichtung aufweist, welches dazu bestimmt ist, längs der genannten Öffnung ausgezogen zu werden, wenn sich die bewegliche Scheibe 10 in der geschlossenen Stellung befindet.

Die Erfindung zeichnet sich dadurch aus, dass die öffnungsfähige Dachvorrichtung 1 Kopplungsmittel 30 aufweist, welche vorübergehend das Verdunkelungsrollo 20 mit der beweglichen Scheibe 10 fest zu verbinden vermögen.

## Beschreibung

Die vorliegende Erfindung betrifft eine öffnungsfähige Dachvorrichtung, welche eine bewegliche Scheibe und ein Verdunkelungsrollo aufweist.

Die Erfindung findet eine besonders vorteilhafte Anwendung auf dem Gebiet von öffnungsfähigen Dächern für Kraftfahrzeuge.

Die öffnungsfähigen Dächer nach dem Stand der Technik bestehen im allgemeinen aus einer einzigen beweglichen Scheibe. Es gibt jedoch einige, welche mit einer Mehrzahl von beweglichen Elementen ausgestattet sind, wobei jedoch das so gebildete Ganze nur ein Äquivalent darstellt. Deshalb bezeichnet der Ausdruck Scheibe aus Gründen der Klarheit im gesamten Text sowohl ein einziges Element wie auch ein zusammengesetztes Element, das beispielsweise aus mehreren untereinander beweglichen Lamellen besteht.

Wenn sie aus Glas oder aus einem beliebigen anderen transparenten oder lichtdurchlässigen Material besteht, wird die bewegliche Scheibe im allgemeinen in Verbindung mit einer Verdunkelungsvorrichtung verwendet, die dazu bestimmt ist, parallel zu der genannten Scheibe ausgezogen zu werden, wenn sich die Scheibe in der Schließstellung befindet. Ziel dabei ist natürlich die Bekämpfung des Treibhauseffektes, indem verhindert wird, dass die Sonnenstrahlen den Innenraum des Fahrzeuges zu rasch aufheizen. Unter den bekannten Verdunkelungsvorrichtungen gehören die Rollovorhänge zu den am häufigsten verwendeten. Es wird einfach daran erinnert, dass ein solches Verdunkelungsrollo stets aus einem weichen Stoff besteht, dessen eines Ende mit einer Aufrollvorrichtung fest verbunden ist, und dessen freies Ende geeignet ist, in einer zu der durch die genannte Aufrollvorrichtung ausgeübten Zugkraft entgegengesetzten Richtung ausgezogen zu werden.

In der Praxis wird die Bewegung der beweglichen Scheibe im allgemeinen mechanisiert, während diejenige des Verdunkelungsrollos meistens manuell erfolgt, da der aufzuwendende Kraftaufwand unvergleichlich geringer ist. Bei dieser sehr verbreiteten Ausgestaltung sind also die jeweiligen Bedienungen der beweglichen Scheibe und des Verdunkelungsrollos von einem mechanischen Standpunkt aus vollständig voneinander getrennt. Dies bedeutet, daß bei der Öffnung der beweglichen Scheibe keinerlei Einfluss auf das Verdunkelungsrollo ausgeübt wird, das im Bereich der Öffnung ausgezogen bleibt. Wenn nun das Fahrzeug in Bewegung ist, wird der so erzeugte Unterdruck besonders lautes Flattern im Bereich des Verdunkelungsrollos auslösen. Abgesehen von dieser besonders unangenehmen Belästigung können solche Flatterbewegungen im übrigen zu einer raschen Beschädigung des Verdunkelungsrollos führen.

Dementsprechend ist das durch den Gegenstand der vorliegenden Erfindung zu lösende technische Problem, eine öffnungsfähige Dachvorrichtung insbesondere für Kraftfahrzeuge vorzuschlagen, wobei die öffnungsfähige Dachvorrichtung eine in der Dachhaut des genannten Kraftfahrzeuges angebrachte Scheibe, die in der Bewegung in bezug auf eine Öffnung in im wesentlicher komplementärer Form beweglich montiert ist, sowie ein Verdunkelungsrollo mit Aufrollvorrichtung aufweist, welcher dazu bestimmt ist, längs der genannten Öffnung ausgezogen zu werden, wenn die bewegliche Scheibe sich in der Schließstellung befindet, wobei eine solche öffnungsfähige Dachvorrichtung es ermöglichen würde, die Probleme des Standes der Technik zu vermeiden, indem insbesondere die Probleme des Flatterns des Verdunkelungsrollos vermieden werden, wenn sich die bewegliche Scheibe in der Öffnungsstellung befindet und das genannte Verdunkelungsrollo ausgezogen ist.

Die Lösung des gestellten technischen Problems besteht erfindungsgemäß darin, dass die öffnungsfähige Dachvorrichtung Kopplungsmittel aufweist, welche geeignet sind, vorübergehend das Verdunkelungsrollo mit der beweglichen Scheibe fest zu verbinden.

Die so definierte Erfindung weist den Vorteil auf, eine mechanische Verbindung zwischen dem Verdunkelungsrollo und der beweglichen Scheibe zu schaffen. Diese mechanische Verbindung muß nicht die Form einer endgültigen Befestigung haben. Die Kopplung muss im Gegensatz dazu in umkehrbarer Form realisierbar sein, damit die bewegliche Scheibe und/oder das Verdunkelungsrollo ihre Fähigkeit behalten, jederzeit einzeln bedient werden zu können.

Es ist anzumerken, dass im Falle einer aus mehreren beweglichen Elementen bestehenden Scheibe das Verdunkelungsrollo vorteilhafterweise vorübergehend mit dem am weitesten vorne liegenden beweglichen Element fest verbunden wird.

Die vorliegende Erfindung betrifft auch Merkmale, die sich im Verlauf der folgenden Beschreibung ergeben und die jeweils einzeln oder nach ihren sämtlichen möglichen technischen Kombinationen in Betracht zu ziehen sind.

Weitere erfindungswesentliche Merkmale gehen aus der nachfolgenden Beschreibung hervor, in der mit Bezug auf die Zeichnungen Ausführungsbeispiele erläutert werden. In den Zeichnungen zeigen:
Fig. 1 teilweise in der Perspektive und von unten eine öffnungsfähige Dachvorrichtung nach einer ersten Ausführungsform der Erfindung;
Fig. 2 eine teilweise Längsschnittansicht der öffnungsfähigen Dachvorrichtung nach Fig. 1, wobei insbesondere die bewegliche Scheibe und das Verdunkelungsrollo jeweils in geschlossener Stellung und in ausgezogener Stellung gezeigt werden;
Fig. 3 eine zur Fig. 2 analoge Darstellung, bei der sich jedoch die bewegliche Scheibe in der Öffnungsphase befindet;
Fig. 4 eine zur Fig. 2 analoge Darstellung, bei der sich jedoch die bewegliche Scheibe in der geschlossenen Stellung befindet und das Verdunkelungsrollo in der Auszugsphase befindlich ist;
Fig. 5 teilweise in der Perspektive und von unten eine öffnungsfähige Dachvorrichtung nach einer zweiten Ausführungsform der Erfindung;
Fig. 6 eine teilweise Längsschnittansicht der öffnungsfähigen Dachvorrichtung nach Fig. 5, wobei insbesondere die bewegliche Scheibe und das Verdunkelungsrollo jeweils in geschlossener Stellung und in ausgezogener Stellung gezeigt werden;
Fig. 7 eine zur Fig. 6 analoge Darstellung, bei der jedoch das Verdunkelungsrollo sich in der Trennungsphase befindet;
Fig. 8 eine zur Fig. 6 analoge Darstellung, bei der jedoch das Verdunkelungsrollo nach dem Abtrennen in der Aufrollphase befindlich ist;
Fig. 9 eine zur Fig. 6 analoge Darstellung, bei der jedoch das Verdunkelungsrollo in der Auszugsphase befindlich ist;
Fig. 10 eine zur Fig. 6 analoge Darstellung, bei der jedoch das Verdunkelungsrollo in der Kopplungsphase befindlich ist;
Fig. 11 eine zur Fig. 6 analoge Darstellung, bei der jedoch die mit dem Verdunkelungsrollo gekoppelte bewegliche Scheibe in teilgeöffneter Stellung befindlich ist;
Fig. 12 eine zur Fig. 6 analoge Darstellung, bei der jedoch die mit dem Verdunkelungsrollo gekoppelte bewegliche Scheibe in der Öffnungsphase befindlich ist;
Fig. 13 eine zur Fig. 6 analoge Darstellung, bei der jedoch das Verdunkelungsrollo vollständig eingezogen ist und die bewegliche Scheibe sich noch immer in der Öffnungsphase befindet; und
Fig. 14 eine zur Fig. 6 analoge Darstellung, bei der sich jedoch das Verdunkelungsrollo und die bewegliche Scheibe in eingezogener beziehungsweise in geöffneter Stellung befinden.

Aus Gründen der Klarheit wurden gleiche Elemente mit identischen Bezugszeichen bezeichnet. Des weiteren wurden lediglich die für das Verständnis der Erfindung wesentlichen Elemente dargestellt, wobei die Maßstäbe nicht eingehalten wurden und die Darstellung jeweils schematisch ist.

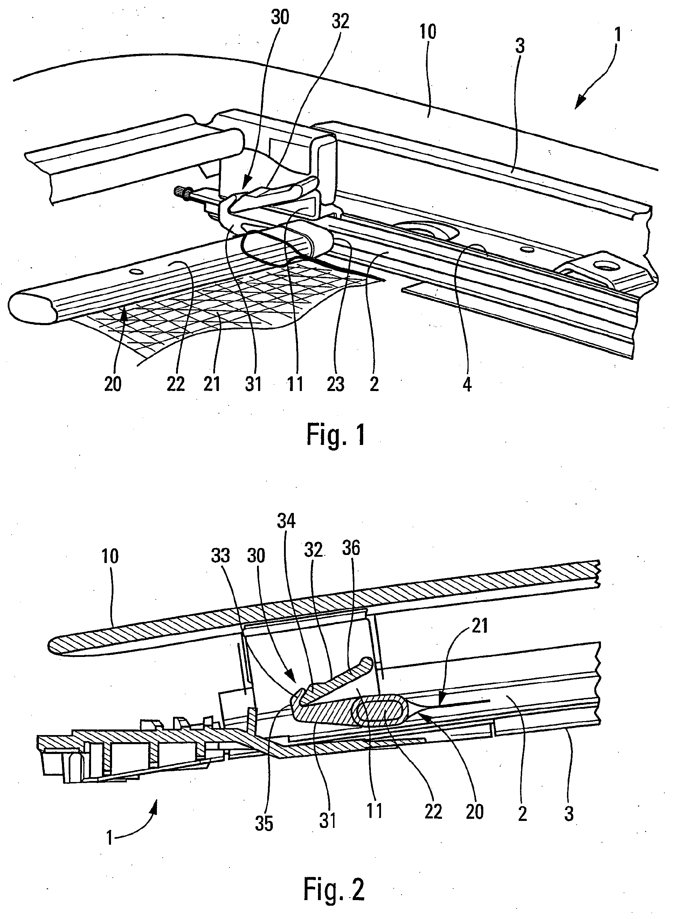

Fig. 1 zeigt in teilweiser Form eine öffnungsfähige Dachvorrichtung 1, welche dazu bestimmt ist, in einer in einer Dachhaut eines Kraftfahrzeuges angebrachten Öffnung eingesetzt zu werden. Die öffnungsfähige Dachvorrichtung 1 weist entsprechend eine bewegliche Scheibe 10 aus Glas auf, welche die Abmessungen aufweist, die im wesentlichen zu denjenigen der Öffnung komplementär sind. Die Scheibe 10 ist im übrigen für eine Bewegung zwischen einer geschlossenen Stellung, bei der sie die Öffnung der Dachhaut verschließt, und einer Öffnungsstellung, bei der sie längs der Dachhaut außerhalb der genannten Öffnung angeordnet ist, beweglich montiert. Die öffnungsfähige Dachvorrichtung 1 weist auch ein Verdunkelungsrollo 20 des Typs mit Aufrollvorrichtung auf, der dazu bestimmt ist, parallel zur Öffnung ausgezogen zu werden, wenn sich die Scheibe 10 in der Schließstellung befindet.

Entsprechend dem Gegenstand der vorliegenden Erfindung weist die öffnungsfähige Dachvorrichtung 1 Kopplungsmittel 30 auf, welche geeignet sind, vorübergehend das Verdunkelungsrollo 20 mit der Scheibe 10 fest zu verbinden.

Nach einer Besonderheit der Erfindung sind die Kopplungsmittel 30 geeignet, das Verdunkelungsrollo 20 in einer Bewegung gleichzeitig mit der Bewegung der Scheibe 10 anzutreiben. Die Kopplungsmittel 30 sind also in einer solchen Weise angeordnet, dass das Verdunkelungsrollo 20 trotz seiner beweglichen Eigenschaften in der Lage ist, mit der Scheibe 10 fest verbunden zu sein, wenn letztere bewegt wird.

In besonders vorteilhafter Weise sind die Kopplungsmittel 30 auch dazu geeignet, automatisch das Verdunkelungsrollo 20 von der Scheibe 10 zu trennen, wenn das Verdunkelungsrollo 20 vollständig eingefahren ist und wenn sich die Scheibe 10 in der Phase maximaler Öffnung befindet.

Nach einer weiteren Besonderheit der Erfindung weisen die Kopplungsmittel 30 mindestens ein erstes Verbindungselement 31 auf, welches mit dem freien Ende 21 des Verdunkelungsrollos 20 fest verbunden und geeignet ist, durch vorübergehende Kopplung mit mindestens einem zweiten Verbindungselement 32 zusammenzuwirken, welches mit der Scheibe 10 fest verbunden ist. Diese vorübergehende Kopplung verleiht den Kopplungsmitteln 30 ihre Fähigkeit, vorübergehend das Verdunkelungsrollo 20 mit der Scheibe 10 fest zu verbinden; jedes erste Verbindungselement 31 und das entsprechende zweite Verbindungselement 32 kann dabei punktuell im Zeitverlauf zusammengefügt oder getrennt werden.

Bei dieser ersten Ausführungsform der Erfindung weist das freie Ende 21 des Verdunkelungsrollos 20 eine feste Zugstange 22 auf, an deren Enden zwei Gleitschuhe 23 fest verbunden sind, welche geeignet sind, jeweils in zwei Nuten 2 zu gleiten, die in zwei beiderseits der Öffnung angeordneten seitlichen Führungsschienen 3 vorgesehen sind. Die Kopplungsmittel 30 weisen hier zwei erste Verbindungselemente 31 auf, die jeweils mit jedem Gleitschuh 23 fest verbunden sind. Die bewegliche Scheibe 10 ist ihrerseits für eine Bewegung über mindestens zwei Antriebsschlitten 11 beweglich montiert, welche geeignet sind, jeweils in zwei Nuten 4 zu gleiten, die hier vorteilhafterweise in den beiden seitlichen Führungsschienen 3 angeordnet sind. Die Kopplungsmittel 30 weisen außerdem zwei zweite Verbindungselemente 32 auf, die jeweils mit jedem Antriebsschlitten 11 fest verbunden sind. Es ist anzumerken, dass die beiden seitlichen Führungsschienen 3 in an sich bekannter Weise dazu bestimmt sind, in Längsrichtung an der Dachhaut des Kraftfahrzeuges längs der seitlichen, die Öffnung begrenzenden Ränder fixiert zu werden.

Wie insbesondere in den Figuren 2 bis 4 zu sehen ist, weist jedes erste Verbindungselement 31 einen einen Haken 33 bildenden Teil auf, und jedes entsprechende zweite Verbindungselement 32 weist einen einen Anschlag 34 bildenden überstehenden Teil 34 auf. In vorteilhafter Weise ist hier jeder Haken 33 geeignet, durch teilweises Eingreifen mit dem entsprechenden Anschlag 34 entsprechend einer Antriebsrichtung zusammenzuwirken, die im wesentlichen parallel zur Bewegungsrichtung des Verdunkelungsrollos 20 verläuft.

Bei dieser besonderen Ausführungsform ist genauer gesagt zu beobachten, daß jeder Anschlag 34 durch das untere Ende einer Rampe 36 gebildet wird, die bezogen auf die Auszugsrichtung des Verdunkelungsrollos 20 geneigt ist. Diese Rampe 36 ist so ausgebildet und angeordnet, dass sie einerseits durch Gleiten mit dem distalen Ende 35 des Hakens 33 bei den Eingriffsund/oder Trennphasen der Kopplungsmittel 30 und andererseits durch teilweises Eingreifen mit dem den Haken 33 bildenden Teil bei dem eigentlichen Erfassen der genannten Kopplungsmittel 30 zusammenzuwirken vermag.

Nach einer Besonderheit dieser genannten ersten Ausführungsform ist die Zugstange 21 geeignet, axial zu kippen, wobei jeder Gleitschuh 23 geeignet ist, sich zumindest teilweise in der Führungsnut 2 zu schwenken, mit der er im übrigen durch Gleitwirkung zusammenwirkt.

Fig. 2 zeigt detaillierter das Zusammenwirken zwischen dem ersten Verbindungselement 31 und dem zweiten Verbindungselement 32, wenn sich die bewegliche Scheibe 10 in der Schließstellung und das Verdunkelungsrollo 20 in der ausgezogenen Stellung befinden. Die Kopplung wird über den Haken 33 hergestellt, welcher durch teilweises Eingreifen mit dem unteren, den Anschlag 34 bildenden Ende der geneigten Rampe 36 zusammenwirkt. Der Kontakt zwischen dem Haken 33 und dem Anschlag 34 wird dadurch sichergestellt, daß das Verdunkelungsrollo 20 ständig der elastischen Rückholkraft ausgesetzt wird, die durch seine Aufrollvorrichtung ausgeübt wird, die in der Figur auf der rechten Seite angeordnet ist.

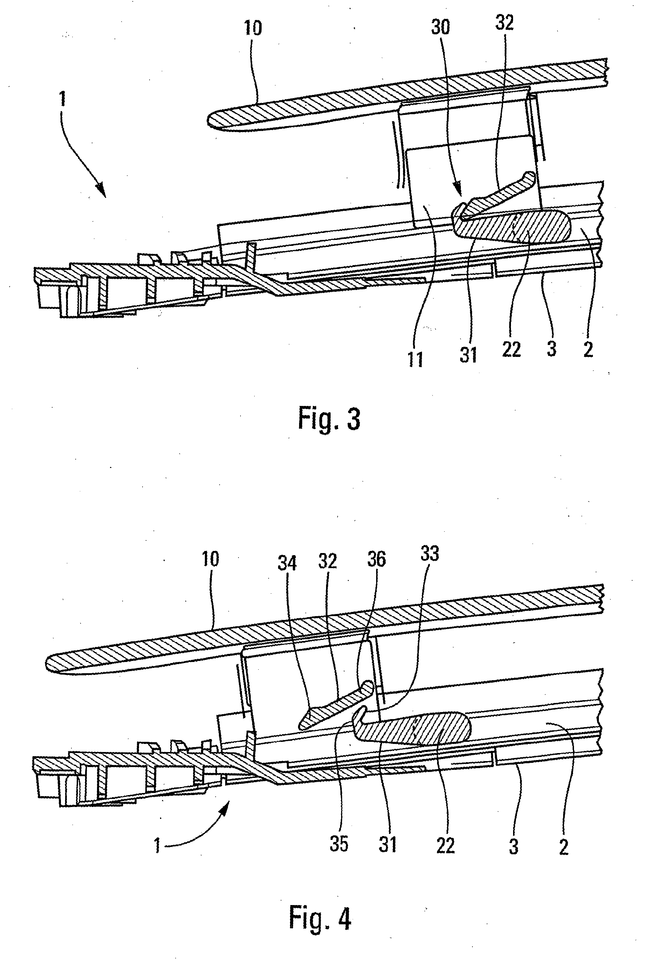

Entsprechend Fig. 3 bleiben die Kopplungsmittel 30 bei der Öffnung der beweglichen Scheibe 10 im Eingriff, da die elastische Rückholkraft, die auf das Verdunkelungsrollo 20 ausgeübt wird, in der gleichen Richtung verläuft, wie die Bewegung der genannten beweglichen Scheibe 10. Das Verdunkelungsrollo 20 wird demzufolge vorteilhafterweise in einer Einziehbewegung zusammen mit der Öffnung der beweglichen Scheibe 10 mitgenommen.

Fig. 4 zeigt ihrerseits das Ausziehen des Verdunkelungsrollos 20, wenn sich die bewegliche Scheibe 10 in geschlossener Stellung befindet. Während dieser Phase wird die Zugstange 22 manuell nach vorne gezogen; die Gleitschuhe 23 gleiten dann in den Führungsnuten 2. Wenn einmal das distale Ende 35 Kontakt mit der geneigten Rampe 36 hat, kippt das erste Verbindungselement 31 dank der Fähigkeit zur axialen Verschwenkung der Zugstange 22 leicht nach unten. Das distale Ende 34 kann dann längs der unteren Fläche der geneigten Rampe 36 solange gleiten, bis der Haken 33 in das den Anschlag 34 der genannten Rampe 36 bildende untere Ende eingreift und damit das Erfassen der Kopplungsmittel 30 herstellt.

Das Trennen der genannten Kopplungsmittel 30 erfolgt im wesentlichen in umgekehrter Form. Es ist hierfür ausreichend, das Verdunkelungsrollo 20 leicht nach vorne zu ziehen, bis der Haken 33 von dem Anschlag 34 getrennt wird. Das axiale Verschwenken der Zugstange 22 nach unten in Kombination mit dem Aufrollen des Verdunkelungsrollos 20 nach hinten ermöglicht es dann dem distalen Ende 35 des ersten Verbindungselements 31 das zweite Verbindungselement 32 zu umgehen. Das Verdunkelungsrollo 20 wird damit vollständig getrennt und kann sich dann auf seiner Aufrollvorrichtung aufrollen.

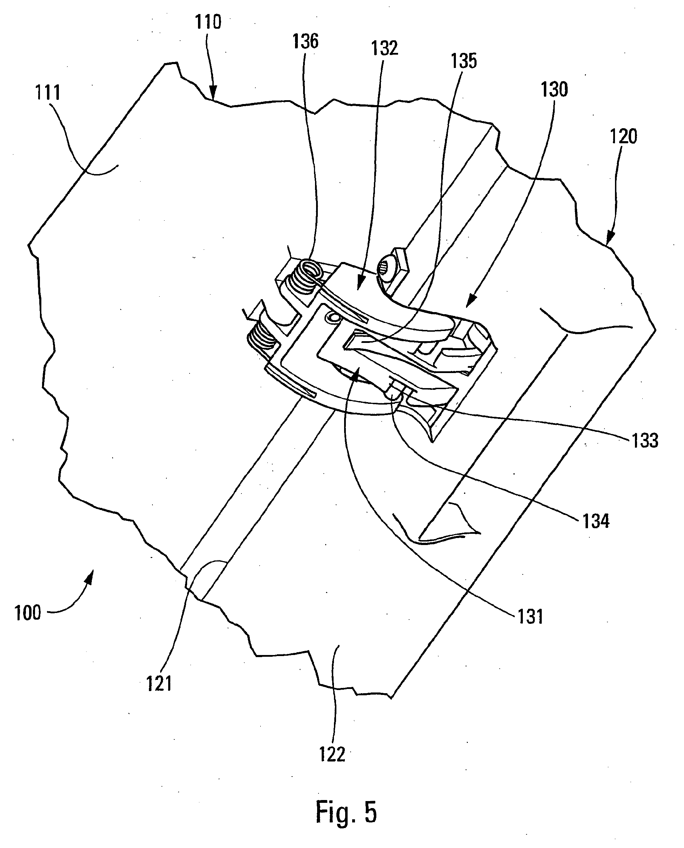

Fig. 5 zeigt eine zweite Ausführungsform der Erfindung. Die öffnungsfähige Dachvorrichtung 100 weist ebenfalls eine bewegliche Scheibe 110 aus Glas, ein aufrollbares Verdunkelungsrollo 120 und Kopplungsmittel 130 auf, welche geeignet sind, vorübergehend das Verdunkelungsrollo 120 mit der Scheibe 110 fest zu verbinden. Aber die Kopplungsmittel 130 sind hier strukturell von ihrem entsprechenden Teil gemäß der ersten Ausführungsform abtrennbar. Außerdem werden sie in anderer Form eingesetzt.

Entsprechend weist das freie Ende 121 des Verdunkelungsrollos 120 einen steifen Teil 122 auf, in dessen Mittelpunkt ein erstes Verbindungselement 131 fest verbunden ist, welches durch vorübergehende Kopplung mit einem zweiten Verbindungselement 132 zusammenzuwirken vermag, welches im Mittelpunkt des vorderen Endes 111 der beweglichen Scheibe 110 fest verbunden ist.

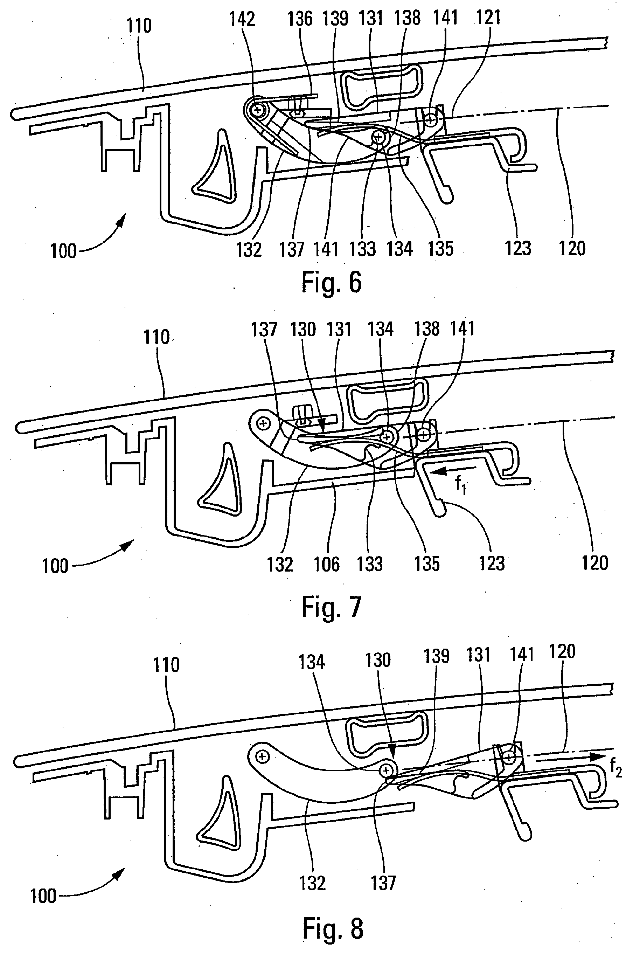

Bei diesem Ausführungsbeispiel und wie dies genauer in Fig. 6 zu sehen ist, ist das erste Verbindungselement 131 transversal gegenüber dem freien Ende 121 des Verdunkelungsrollos 120 um eine Achse 141 schwenkbeweglich. Das erste Verbindungselement 131 weist im übrigen mindestens einen einen Haken 133 bildenden Teil sowie ein elastisches Rückholmittel 135 auf, das hier die Form einer Blattfeder hat, welches das freie Ende 137 des ersten Verbindungselements 131 in der Richtung des zweiten Verbindungselements 132 mitzunehmen vermag. Das zweite Verbindungselement 132 ist seinerseits gegenüber dem vorderen Ende der beweglichen Scheibe 110 um eine Achse 142 schwenkbeweglich. Es weist mindestens einen einen Ansatz 134 bildenden überstehenden Teil 134 sowie ein elastisches Rückholmittel 136 auf, das hier die Form einer Spiralfeder hat, welche das freie Ende 138 des zweiten Verbindungselements 132 in der Richtung hin zum ersten Verbindungselement 131 mitzunehmen vermag. Jeder Haken 133 ist hier geeignet, durch teilweises Eingreifen mit dem entsprechenden Ansatz 134 in einer Eingriffsrichtung zusammenzuwirken, die im wesentlichen zur Auszugsrichtung des Verdunkelungsrollos 120 parallel ist.

Nach einer Besonderheit dieser zweiten Ausführungsform weist jeder den Haken 133 bildende Teil einerseits eine obere Fläche 139, welche durch Gleiten mit dem entsprechenden Anschlag 134 bei dem Trennen der Kopplungsmittel 130 zusammenzuwirken vermag, und andererseits eine untere Fläche 141 auf, die durch Gleiten mit dem genannten Ansatz 134 während des Eingreifens der genannten Kopplungsmittel 130 zusammenzuwirken vermag.

Es ist anzumerken, daß der steife Teil 122 auch einen Handgriff 123 aufweist, welcher dazu bestimmt ist, das Verdunkelungsrollo 120 von Hand zu betätigen.

Fig. 6 zeigt detaillierter das Zusammenwirken des ersten Verbindungselements 131 und des zweiten Verbindungselements 132, wenn sich die bewegliche Scheibe in der Schließstellung und das Verdunkelungsrollo 120 in der ausgezogenen Stellung befinden. Die Kopplung wird über den Haken 133 hergestellt, welcher durch teilweises Eingreifen mit dem den Anschlag bildenden Ansatz 134 zusammenwirkt. Der Kontakt zwischen dem Haken 133 und dem Ansatz 134 wird dadurch sichergestellt, daß das Verdunkelungsrollo 120 ständig der elastischen Rückholkraft ausgesetzt wird, die durch seine Aufrollvorrichtung 124 ausgeübt wird, die in der Figur auf der rechten Seite angeordnet ist.

Fig. 7 zeigt genau das Entriegeln der Kopplungsmittel 130. Diese Phase beginnt also durch eine kurze Bewegung des Verdunkelungsrollos 120 in der Richtung des Ausziehens mit Hilfe des Handgriffs 123 (Pfeil f1). Die geringe Strecke, die zwischen dem Handgriff 123 und der Innenauskleidung 106 besteht, ist jedoch ausreichend, um das Lösen des Hakens 133 vom Ansatz 134 zu erlauben. Da das zweite Verbindungselement 132 im übrigen der Wirkung der Spiralfeder 136 ausgesetzt ist, wird sich sein freies Ende 138 also leicht anheben, bis es sich im wesentlichen auf der gleichen Ebene wie das Verdunkelungsrollo 120 erstreckt.

Entsprechend Fig. 8 ist es damit ausreichend, den durch den Handgriff 123 ausgeübten Druck zu lösen, um zu erreichen, daß das Verdunkelungsrollo 120 unter der Wirkung seiner Aufrollvorrichtung 124 in der Einzugrichtung mitgenommen wird (Pfeil f2). Im Laufe dieser Bewegung wirkt der Ansatz 134 durch Gleiten mit der oberen Fläche 139 des ersten Verbindungselements 131 zusammen. Da sich der Ansatz 134 im übrigen im wesentlichen auf der gleichen Höhe wie die Schwenkachse 141 befindet, wird das freie Ende 137 des ersten Verbindungselements 131 leicht nach unten schwenken, bis die Kopplungsmittel 130 vollständig gelöst sind.

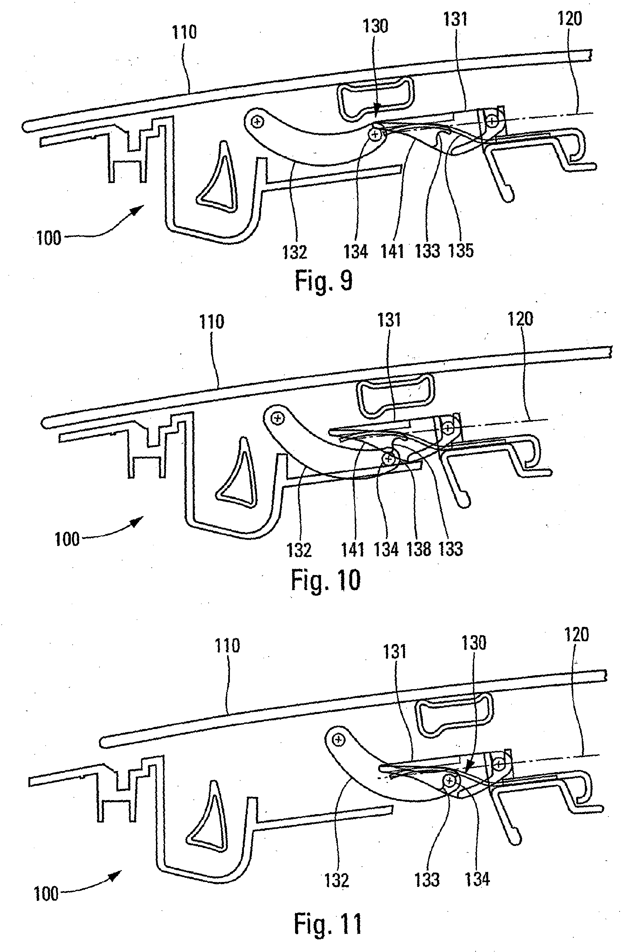

Fig. 9 zeigt die Kopplungsmittel 130 zum Zeitpunkt ihres Eingriffs. Das erste Verbindungselement 131 ist in der Achse des Verdunkelungsrollos 120 und in Richtung hin zum zweiten Verbindungselement 132 unter der Einwirkung der Blattfeder 135 positioniert. Das zweite Verbindungselement 132 ist seinerseits ebenfalls in der Achse des Verdunkelungsrollos 120 und in der Richtung hin zum ersten Verbindungselement 131 unter der Wirkung der Spiralfeder 136 positioniert. Aufgrund dieser Anordnung befindet sich der Ansatz 134 in Kontakt mit der unteren Fläche 141 des Hakens 133.

Wie in Fig. 10 gezeigt, wird der Ansatz 134 entsprechend längs der oberen Fläche 141 gleiten, wenn sich das Ausziehen des Verdunkelungsrollos 120 fortsetzt. Dies bewirkt dann das Schwenken des freien Endes 138 des zweiten Verbindungselements 132 nach unten, bis der Ansatz 134 erneut in den Haken 133 eingreift und damit die Verriegelung der Kopplungsmittel 130 sicherstellt.

Fig. 11 zeigt die bewegliche Scheibe 110, gekoppelt mit dem Verdunkelungsrollo 120, in geöffneter Stellung. Da das Verdunkelungsrollo 120 ständig der Wirkung seiner Aufrollvorrichtung 124 ausgesetzt ist, ist der Kontakt zwischen dem Haken 133 und dem Ansatz 134 während der gesamten Bewegung der beweglichen Scheibe 110 in Richtung auf die Öffnungsstellung sichergestellt.

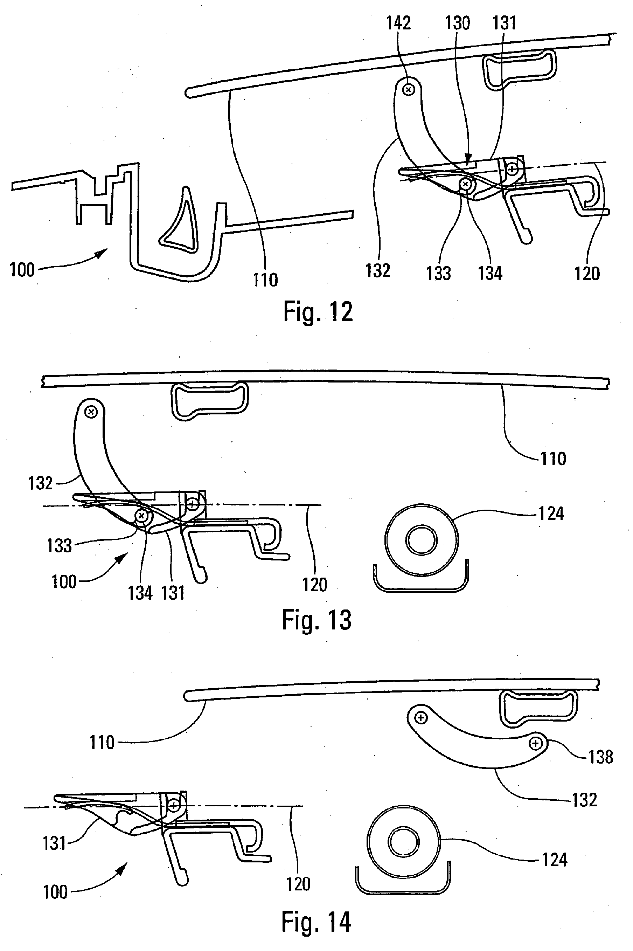

Nach Fig. 12 kann bewirkt werden, daß die bewegliche Scheibe 110 vertikal im Laufe der Öffnungsphase angehoben wird. Dies ist insbesondere dann der Fall, wenn das Verdunkelungsrollo 110, um sich zu öffnen, oberhalb der Dachhaut des Kraftfahrzeuges positioniert werden muß. Dank der schwenkbaren Montage des zweiten Verbindungselements 132 um die Achse 142 kann der Ansatz 134 vorteilhafterweise während der gesamten Bewegung mit dem Haken 133 gekoppelt bleiben. Die Anhebung der beweglichen Scheibe 110 wird hier vollständig durch die gelenkige Struktur der Kopplungsmittel 130 kompensiert.

Wenn das Verdunkelungsrollo 120 vollständig eingefahren ist, befindet sich das erste Verbindungselement 131 in der Längstranslation in Blockierstellung. Wenn sich die bewegliche Scheibe 110 dagegen noch immer in der Öffnungsphase befindet, wie dies in Fig. 13 gezeigt ist, wird der Ansatz 134 beginnen, sich von dem Haken 133 zu lösen, und das zweite Verbindungselement 132 wird sich damit automatisch von dem ersten Verbindungselement 131 abkoppeln.

Wie in Fig. 14 gezeigt, wird die Spiralfeder 136 dann das freie Ende 138 in seine ursprüngliche Stellung zurückführen, und die bewegliche Scheibe 110 kann so bis zur Öffnungsstellung zurückgeführt werden.

Es ist gut zu verstehen, daß bei dieser Ausführungsform die Schließung der beweglichen Scheibe 110 keinerlei Auswirkung auf das Verdunkelungsrollo 120 hat. Das Ausziehen des letzteren kann nur manuell durch Verwendung des Handgriffs 123 ausgeführt werden. Seine Blockierung in ausgezogener Stellung erfordert natürlich den Einsatz der Kopplungsmittel 130.

## Patentansprüche

1. Öffnungsfähige Dachvorrichtung (1, 100) insbesondere für Kraftfahrzeuge, welche öffnungsfähige Dachvorrichtung (1, 100) eine Scheibe (10, 110), welche gegenüber einer Öffnung in der Dachhaut des Fahrzeuges in im wesentlichen komplementärer Form verschiebebeweglich montiert ist, sowie ein Verdunkelungsrollo (20, 120) mit Aufrollvorrichtung aufweist, welches dazu bestimmt ist, längs der genannten Öffnung ausgezogen zu werden, wenn sich die bewegliche Scheibe (10, 110) in der Schließstellung befindet, **dadurch gekennzeichnet, daß** sie Kopplungsmittel (30, 130) aufweist, welche das Verdunkelungsrollo (20, 120) vorübergehend mit der beweglichen Scheibe (10, 110) fest zu verbinden vermögen.

2. Öffnungsfähige Dachvorrichtung (1, 100) nach Anspruch 1, **dadurch gekennzeichnet, dass** die Kopplungsmittel (30, 130) in der Lage sind, bei einer Bewegung das Verdunkelungsrollo (20, 120) gleichzeitig mit der Bewegung der beweglichen Scheibe (10, 110) mitzunehmen.

3. Öffnungsfähige Dachvorrichtung (1, 100) nach Anspruch 1 oder 2, **dadurch gekennzeichnet, daß** die Kopplungsmittel (30, 130) geeignet sind, das Verdunkelungsrollo (20, 120) automatisch von der beweglichen Scheibe (10, 110) zu trennen, wenn das Verdunkelungsrollo (20, 120) vollständig eingefahren ist und sich die bewegliche Scheibe (10, 110) in der Phase der maximalen Öffnung befindet.

4. Öffnungsfähige Dachvorrichtung (1, 100) nach einem der Ansprüche 1 bis 3, **dadurch gekennzeichnet, daß** die Kopplungsmittel (30, 130) mindestens ein erstes Verbindungselement (31, 131) aufweisen, welches mit dem freien Ende (21, 121) des Verdunkelungsrollos (20, 120) fest verbunden ist und durch vorübergehende Kopplung mit mindestens einem zweiten, mit der beweglichen Scheibe (10, 110) verbundenen Verbindungselement (32, 132) zusammenzuwirken vermag.

5. Öffnungsfähige Dachvorrichtung (1, 100) nach einem der Ansprüche 1 bis 4, **dadurch gekennzeichnet, dass** das freie Ende (21) des Verdunkelungsrollos (20, 120) eine starre Zugstange (22) aufweist, an deren Enden zwei Gleitschuhe (23) fest verbunden sind, welche geeignet sind, jeweils in zwei Führungsnuten (2) zu gleiten, welche beiderseits der Öffnung angeordnet sind, und dadurch, dass die bewegliche Scheibe (10) für eine Bewegung über mindestens zwei Antriebsschlitten (11) beweglich montiert ist, welche geeignet sind, jeweils in zwei Führungsnuten (4) zu gleiten, die beiderseits der Öffnung angeordnet sind, wobei die Kopplungsmittel (30) zwei erste Verbindungselemente (31) aufweisen, die jeweils mit jedem Gleitschuh (23) fest verbunden sind, sowie zwei zweite Verbindungselemente (32), die jeweils mit jedem Antriebsschlitten (11) fest verbunden sind.

6. Öffnungsfähige Dachvorrichtung (1) nach Anspruch 4 oder 5, **dadurch gekennzeichnet, daß** jedes erste Verbindungselement (31) einen einen Haken (33) bildenden Teil aufweist und jedes zweite Verbindungselement (32) einen einen Anschlag (34) bildenden überstehenden Teil aufweist, wobei jeder Haken (33) geeignet ist, durch teilweises Eingreifen in den entsprechenden Anschlag (34) entsprechend einer Antriebsrichtung zusammenzuwirken, die im wesentlichen parallel zur Bewegungsrichtung des Verdunkelungsrollos (20) verläuft.

7. Öffnungsfähige Dachvorrichtung (1) nach Anspruch 6, **dadurch gekennzeichnet, daß** jeder Anschlag (34) durch das untere Ende einer Rampe (36) gebildet wird, die bezogen auf die Auszugsrichtung des Verdunkelungsrollos (20) geneigt ist, wobei die Rampe (36) einerseits durch Gleiten mit dem distalen Ende (35) des Hakens (33) bei den Eingriffs- oder Trennphasen der Kopplungsmittel (30) und andererseits durch teilweises Eingreifen in den den Haken (33) bildenden Teil bei dem eigentlichen Erfassen der genannten Kopplungsmittel (30) zusammenzuwirken vermag.

8. Öffnungsfähige Dachvorrichtung (1) nach einem der Ansprüche 5 bis 7, **dadurch gekennzeichnet, daß** die Zugstange (21) geeignet ist, axial zu kippen, wobei jeder Gleitschuh (23) geeignet ist, zumindest teilweise in der Führungsnut (2) zu verschwenken, mit der er im übrigen durch Gleitbewegung zusammenwirkt.

9. Öffnungsfähige Dachvorrichtung (100) nach einem der Ansprüche 1 bis 4, **dadurch gekennzeichnet, daß** das freie Ende (121) des Verdunkelungsrollos (120) einen starren Teil (122) aufweist, an dessen Mittelpunkt ein erstes Verbindungselement (131) fest verbunden ist, welches durch vorübergehende Kopplung mit einem zweiten Verbindungselement (132) zusammenzuwirken vermag, das im Mittelpunkt des vorderen Endes (111) der beweglichen Scheibe (110) fest verbunden ist.

10. Öffnungsfähige Dachvorrichtung (100) nach Anspruch 9, **dadurch gekennzeichnet, daß** das erste Verbindungsmittel (131) in Querrichtung und gegenüber dem freien Ende (121) des Verdunkelungsrollos (120) schwenkbeweglich montiert ist und mindestens einen den Haken bildenden Teil (133) sowie ein elastisches Rückholmittel (135) aufweist, welches sein freies Ende (137) in Richtung auf das zweite Verbindungselement (132) mitzunehmen vermag, und dadurch, daß das zweite Verbindungselement (132) in Querrichtung gegenüber dem vorderen Ende der beweglichen Scheibe (110) schwenkbeweglich montiert ist und mindestens einen den Ansatz (134) bildenden überstehenden Teil sowie ein elastisches Rückholmittel (136) aufweist, welches das freie Ende (138) in der Richtung hin zum zweiten Verbindungselement (132) mitzunehmen vermag, wobei jeder Haken (133) durch teilweises Eingreifen mit dem entsprechenden Ansatz (134) entsprechend einer im wesentlichen zur Ausfahrrichtung des Verdunkelungsrollos (120) parallelen Eingriffsrichtung zusammenzuwirken vermag.

11. Öffnungsfähige Dachvorrichtung (1) nach Anspruch 10, **dadurch gekennzeichnet, daß** jeder den Haken bildende Teil (133) einerseits eine obere Fläche (139), welche durch Gleiten mit dem entsprechenden Ansatz (134) beim Lösen der Kopplungsmittel (130) zusammenzuwirken vermag, und andererseits eine untere Fläche (141) aufweist, welche durch Gleiten bei dem Eingreifen der genannten Kopplungsmittel (130) mit dem genannten Ansatz (134) zusammenzuwirken vermag.
